# EUROPEAN PATENT APPLICATION

(11) **EP 4 691 771 A1**
(43) Date of publication of application: **11.02.2026**
(21) Application number: 24779178.3
(22) Date of filing: 05.03.2024
(51) Int. Cl.: B32B 27/30, B29C 41/18, B32B 5/18, B32B 27/40, B60K 37/00, C08K 5/098, C08K 5/10, C08L 27/06

(54) **LAMINATE AND LAMINATE PRODUCTION METHOD**

(30) Priority: 27.03.2023 JP 2023050667
(71) Applicant: Zeon Corporation, Tokyo 100-8246 (JP)
(72) Inventor: KARASAKI, Takafumi, Tokyo 100-8246 (JP); FUJIWARA, Takanori, Tokyo 100-8246 (JP)
(74) Representative: Maiwald GmbH
(86) International application number: PCT/JP2024/008347
(87) International publication number: WO 2024/203040

(57) **Abstract**

Provided is a laminate of a vinyl chloride resin molded product and a foamed polyurethane molded product in which discoloration of the vinyl chloride resin molded product under high temperature conditions is suppressed. The laminate is a laminate comprising a vinyl chloride resin molded product and a foamed polyurethane molded product stacked adjacent to the vinyl chloride resin molded product, wherein the vinyl chloride resin molded product is a molded product obtained by molding a vinyl chloride resin composition comprising a vinyl chloride resin, an aliphatic dicarboxylic acid salt, and a plasticizer.

## Description

### TECHNICAL FIELD

The present disclosure relates to a laminate and a method of producing a laminate.

### BACKGROUND

Vinyl chloride resin is generally used in various applications due to its excellent properties such as cold resistance, heat resistance, and oil resistance. For example, for forming automobile interior components such as automobile instrument panels and door trims, a laminate in which a vinyl chloride resin molded product and a foamed polyurethane molded product are stacked adjacent to each other is used. Techniques for producing such laminates have conventionally been studied.

For example, PTL 1 discloses a method in which a vinyl chloride resin molded product is prepared by powder molding a vinyl chloride resin composition comprising a vinyl chloride resin, a plasticizer, and additives such as a hydrotalcite-based stabilizer, a zeolite-based stabilizer, and a β-diketone, and in which a laminate is produced by stacking a foamed polyurethane molded product on the vinyl chloride resin molded product.

### CITATION LIST

### Patent Literature

PTL 1: WO 2020/090556 A1

### SUMMARY

### (Technical Problem)

Conventional laminates of a vinyl chloride resin molded product and a foamed polyurethane molded product, including PTL 1, have a problem in that the vinyl chloride resin molded product undergoes discoloration (particularly yellowing) when exposed to high temperature conditions. That is, there has been room for improvement in the conventional laminates in terms of suppressing discoloration of the vinyl chloride resin molded product under high temperature conditions.

Accordingly, the present disclosure aims to provide a laminate of a vinyl chloride resin molded product and a foamed polyurethane molded product in which discoloration of the vinyl chloride resin molded product under high temperature conditions is suppressed, and a method of producing such a laminate.

### (Solution to Problem)

The present inventors have conducted intensive studies to solve the above problem. As a result, the present inventors have found that, by using a vinyl chloride resin composition comprising an aliphatic dicarboxylic acid salt in addition to a vinyl chloride resin and a plasticizer for producing the vinyl chloride resin molded product that is a constituent of the laminate, discoloration of the vinyl chloride resin molded product under high temperature conditions can be suppressed, thereby completing the present disclosure.

That is, the present disclosure is intended to advantageously solve the above problem, and according to the present disclosure, laminates of [1] to [6] and methods of producing laminates of [7] to [12] are provided.
[1] A laminate comprising a vinyl chloride resin molded product and a foamed polyurethane molded product stacked adjacent to the vinyl chloride resin molded product, wherein the vinyl chloride resin molded product is a molded product obtained by molding a vinyl chloride resin composition comprising a vinyl chloride resin, an aliphatic dicarboxylic acid salt, and a plasticizer.
   A laminate of a vinyl chloride resin molded product that is a molded product of a vinyl chloride resin composition comprising a vinyl chloride resin, an aliphatic dicarboxylic acid salt, and a plasticizer and a foamed polyurethane molded product is less likely to undergo discoloration of the vinyl chloride resin molded product when exposed to high temperature conditions.
[2] The laminate according to [1], wherein content of the aliphatic dicarboxylic acid salt in the vinyl chloride resin composition is not less than 0.30 parts by mass and not more than 8.00 parts by mass per 100 parts by mass of the vinyl chloride resin.
   If the content of the aliphatic dicarboxylic acid salt in the vinyl chloride resin composition is within the above range, discoloration of the vinyl chloride resin molded product that is a constituent of the laminate under high temperature conditions can be further suppressed. In addition, when producing the vinyl chloride resin molded product from the vinyl chloride resin composition, the powder fluidity of the vinyl chloride resin composition can be improved.
[3] The laminate according to [1] or [2], wherein the aliphatic dicarboxylic acid salt comprises at least one selected from the group consisting of disodium maleate, disodium malonate, disodium succinate, disodium adipate, and disodium sebacate.
   When any of the above is used as the aliphatic dicarboxylic acid salt, discoloration of the vinyl chloride resin molded product that is a constituent of the laminate under high temperature conditions can be further suppressed. In addition, when producing the vinyl chloride resin molded product from the vinyl chloride resin composition, the powder fluidity of the vinyl chloride resin composition can be improved.
[4] The laminate according to any one of [1] to [3], wherein content of the plasticizer in the vinyl chloride resin composition is not less than 50 parts by mass and not more than 200 parts by mass per 100 parts by mass of the vinyl chloride resin.
   If the content of the plasticizer in the vinyl chloride resin composition is within the above range, the flexibility and light resistance of the vinyl chloride resin molded product that is a constituent of the laminate can be improved. In addition, when producing the vinyl chloride resin molded product from the vinyl chloride resin composition, the powder fluidity of the vinyl chloride resin composition can be improved. Furthermore, while improving the meltability of the vinyl chloride resin composition, the surface smoothness of the vinyl chloride resin molded product can be enhanced.
[5] The laminate according to any one of [1] to [4], wherein the plasticizer comprises a polyester containing a structural unit derived from adipic acid and a structural unit derived from a polyhydric alcohol.
   When the above polyester is used as the plasticizer, the light resistance and heat contraction resistance of the vinyl chloride resin molded product that is a constituent of the laminate can be improved. In addition, when producing the vinyl chloride resin molded product from the vinyl chloride resin composition, the powder fluidity of the vinyl chloride resin composition can be improved. Furthermore, while improving the meltability of the vinyl chloride resin composition, the surface smoothness of the vinyl chloride resin molded product can be enhanced.
[6] The laminate according to any one of [1] to [5], wherein the laminate is for an automobile instrument panel.
[7] A method of producing a laminate, comprising molding a vinyl chloride resin composition comprising a vinyl chloride resin, an aliphatic dicarboxylic acid salt, and a plasticizer to obtain a vinyl chloride resin molded product, and stacking a foamed polyurethane molded product on a surface of the vinyl chloride resin molded product to obtain a laminate in which the vinyl chloride resin molded product and the foamed polyurethane molded product are stacked adjacent to each other.
   A laminate of a vinyl chloride resin molded product obtained by molding a vinyl chloride resin composition comprising a vinyl chloride resin, an aliphatic dicarboxylic acid salt, and a plasticizer, and a foamed polyurethane molded product is less likely to undergo discoloration of the vinyl chloride resin molded product when exposed to high temperature conditions.
[8] The method of producing a laminate according to [7], wherein content of the aliphatic dicarboxylic acid salt in the vinyl chloride resin composition is not less than 0.30 parts by mass and not more than 8.00 parts by mass per 100 parts by mass of the vinyl chloride resin.
   If the content of the aliphatic dicarboxylic acid salt in the vinyl chloride resin composition is within the above range, discoloration of the vinyl chloride resin molded product that is a constituent of the laminate under high temperature conditions can be further suppressed. In addition, when producing the vinyl chloride resin molded product from the vinyl chloride resin composition, the powder fluidity of the vinyl chloride resin composition can be improved.
[9] The method of producing a laminate according to [7] or [8], wherein the aliphatic dicarboxylic acid salt comprises at least one selected from the group consisting of disodium maleate, disodium malonate, disodium succinate, disodium adipate, and disodium sebacate.
   When any of the above is used as the aliphatic dicarboxylic acid salt, discoloration of the vinyl chloride resin molded product that is a constituent of the laminate under high temperature conditions can be further suppressed. In addition, when producing the vinyl chloride resin molded product from the vinyl chloride resin composition, the powder fluidity of the vinyl chloride resin composition can be improved.
[10] The method of producing a laminate according to any one of [7] to [9], wherein content of the plasticizer in the vinyl chloride resin composition is not less than 50 parts by mass and not more than 200 parts by mass per 100 parts by mass of the vinyl chloride resin.
   If the content of the plasticizer in the vinyl chloride resin composition is within the above range, the flexibility and light resistance of the vinyl chloride resin molded product that is a constituent of the laminate can be improved. In addition, when producing the vinyl chloride resin molded product from the vinyl chloride resin composition, the powder fluidity of the vinyl chloride resin composition can be improved. Furthermore, while improving the meltability of the vinyl chloride resin composition, the surface smoothness of the vinyl chloride resin molded product can be enhanced.
[11] The method of producing a laminate according to any one of [7] to [10], wherein the plasticizer comprises a polyester containing a structural unit derived from adipic acid and a structural unit derived from a polyhydric alcohol.
   When the above polyester is used as the plasticizer, the light resistance and heat contraction resistance of the vinyl chloride resin molded product that is a constituent of the laminate can be improved. In addition, when producing the vinyl chloride resin molded product from the vinyl chloride resin composition, the powder fluidity of the vinyl chloride resin composition can be improved. Furthermore, while improving the meltability of the vinyl chloride resin composition, the surface smoothness of the vinyl chloride resin molded product can be enhanced.
[12] The method of producing a laminate according to any one of [7] to [11], wherein the vinyl chloride resin molded product is obtained by powder slush molding the vinyl chloride resin composition.

If the vinyl chloride resin molded product is produced by powder slush molding the vinyl chloride resin composition, a vinyl chloride resin molded product that can be suitably used as an automobile interior material such as a surface skin for an automobile instrument panel can be easily obtained.

### (Advantageous Effect)

According to the present disclosure, it is possible to provide a laminate of a vinyl chloride resin molded product and a foamed polyurethane molded product in which discoloration of the vinyl chloride resin molded product under high temperature conditions is suppressed, and a method of producing such a laminate.

### DETAILED DESCRIPTION

Hereinafter, embodiments of the present disclosure will be described in detail.

The laminate of the present disclosure can be suitably used, for example, as an automobile interior material used in the manufacture of automobile interior components such as automobile instrument panels and door trims. The method of producing a laminate of the present disclosure can be used in the production of the laminate of the present disclosure.

### (Laminate)

The laminate of the present disclosure is formed by stacking a vinyl chloride resin molded product and a foamed polyurethane molded product adjacent to each other. The vinyl chloride resin molded product typically constitutes one surface of the laminate. The laminate may further comprise any configuration other than the vinyl chloride resin molded product and the foamed polyurethane molded product, depending on its intended use.

In the laminate of the present disclosure, the vinyl chloride resin molded product is formed from a vinyl chloride resin composition comprising a vinyl chloride resin, an aliphatic dicarboxylic acid salt, and a plasticizer, and therefore, the vinyl chloride resin molded product is less likely to undergo discoloration when exposed to high temperature conditions.

Although the reason why the use of such a vinyl chloride resin composition to mold the vinyl chloride resin molded product can suppress discoloration of the vinyl chloride resin molded product when the laminate is exposed to high temperature conditions is not clear, it is presumed as follows.

First, the foamed polyurethane molded product may contain a residual amine component that was used as a polymerization catalyst. This amine component may migrate from the foamed polyurethane molded product to the vinyl chloride resin molded product in the laminate, particularly under high temperature conditions. The inventors have found that, due to a reaction with the amine component, hydrogen chloride is eliminated from the vinyl chloride resin, and this hydrogen chloride causes discoloration of the vinyl chloride resin molded product. In contrast, in the laminate of the present disclosure, since the vinyl chloride resin molded product contains an aliphatic dicarboxylic acid salt originating from the vinyl chloride resin composition, the aliphatic dicarboxylic acid salt can deactivate the amine component. In particular, since the aliphatic dicarboxylic acid salt has not one but two carboxy groups, it can strongly capture the amine component through a cross-linked structure between the carboxy groups. As a result, it is considered that elimination of hydrogen chloride from the vinyl chloride resin due to the amine component can be suppressed, thereby preventing discoloration of the vinyl chloride resin molded product.

### <Vinyl Chloride Resin Molded Product>

The vinyl chloride resin molded product is a molded product of a vinyl chloride resin composition.

Here, the vinyl chloride resin composition comprises a vinyl chloride resin, an aliphatic dicarboxylic acid salt, and a plasticizer, and may optionally further comprise additives other than the vinyl chloride resin, aliphatic dicarboxylic acid salt, and plasticizer.

Since the vinyl chloride resin molded product is obtained by molding the vinyl chloride resin composition, the mass ratio of each component in the vinyl chloride resin molded product is usually the same as the mass ratio of each component in the vinyl chloride resin composition.

### <<Vinyl Chloride Resin>>

As the vinyl chloride resin, a particulate vinyl chloride resin is typically used. The vinyl chloride resin may contain, for example, one or two or more types of vinyl chloride resin particles, and may optionally further contain one or two or more types of vinyl chloride resin fine particles. Among these, the vinyl chloride resin preferably contains at least vinyl chloride resin particles, and more preferably contains both vinyl chloride resin particles and vinyl chloride resin fine particles.

The vinyl chloride resin can be produced by any conventionally known production method, such as suspension polymerization, emulsion polymerization, solution polymerization, or bulk polymerization.

In the present specification, "resin particle" refers to a particle having a particle diameter of 30 µm or more, and "resin fine particle" refers to a particle having a particle diameter of less than 30 µm.

As the vinyl chloride resin, in addition to a homopolymer composed of vinyl chloride monomer units, a vinyl chloride-based copolymer containing preferably 50 mass% or more, and more preferably 70 mass% or more of vinyl chloride monomer units may be used. Specific examples of monomers (comonomers) that can be copolymerized with vinyl chloride monomer to constitute the vinyl chloride-based copolymer include those described in International Publication No. 2016/098344. These components may be used alone or in any combination of two or more at any ratio.

### [Vinyl Chloride Resin Particles]

In the vinyl chloride resin composition, the vinyl chloride resin particles usually function as a matrix resin (substrate). The vinyl chloride resin particles are preferably produced by suspension polymerization.

### - Average Degree of Polymerization -

The average degree of polymerization of the vinyl chloride resin constituting the vinyl chloride resin particles is preferably 800 or more, more preferably 1000 or more, preferably 5000 or less, more preferably 3000 or less, and still more preferably 2800 or less. If the average degree of polymerization of the vinyl chloride resin constituting the vinyl chloride resin particles is 800 or more, it is possible to sufficiently ensure the physical strength of the vinyl chloride resin molded product formed using the vinyl chloride resin composition, and, for example, to improve tensile properties, particularly tensile elongation. A vinyl chloride resin molded product with good tensile elongation can be suitably used, for example, as an automobile interior material such as a surface skin of an automobile instrument panel with excellent ductility, which breaks as designed without scattering fragments when an airbag inflates and deploys. On the other hand, if the average degree of polymerization of the vinyl chloride resin constituting the vinyl chloride resin particles is 5000 or less, the meltability of the vinyl chloride resin composition can be improved, and the surface smoothness of the vinyl chloride resin molded product formed using the vinyl chloride resin composition can be enhanced.

The average degree of polymerization of the vinyl chloride resin constituting the vinyl chloride resin particles may be 1400 or more, 1500 or more, or 1600 or more, and may also be 1600 or less, 1500 or less, or 1400 or less.

In the present specification, the "average degree of polymerization" can be measured in accordance with JIS K6720-2.

### - Average Particle Diameter -

The average particle diameter of the vinyl chloride resin particles is usually 30 µm or more, preferably 50 µm or more, more preferably 100 µm or more, preferably 500 µm or less, and more preferably 200 µm or less. If the average particle diameter of the vinyl chloride resin particles is 30 µm or more, the powder fluidity of the vinyl chloride resin composition can be improved. On the other hand, if the average particle diameter of the vinyl chloride resin particles is 500 µm or less, the meltability of the vinyl chloride resin composition can be improved, and the surface smoothness of the vinyl chloride resin molded product formed using the vinyl chloride resin composition can be enhanced.

In the present specification, the "average particle diameter" can be measured as a volume-average particle diameter by the laser diffraction method in accordance with JIS Z8825.

### - Content Ratio -

The content ratio of the vinyl chloride resin particles in the vinyl chloride resin is preferably 70 mass% or more, and more preferably 80 mass% or more, may be up to 100 mass%, and is preferably 95 mass% or less, and more preferably 90 mass% or less. If the content ratio of the vinyl chloride resin particles in the vinyl chloride resin is 70 mass% or more, it is possible to sufficiently ensure the physical strength of the vinyl chloride resin molded product formed using the vinyl chloride resin composition and to improve tensile elongation. On the other hand, if the content ratio of the vinyl chloride resin particles in the vinyl chloride resin is 95 mass% or less, the powder fluidity of the vinyl chloride resin composition can be improved.

### [Vinyl Chloride Resin Fine Particles]

In the vinyl chloride resin composition, the vinyl chloride resin fine particles usually function as a dusting agent (powder fluidity modifier). The vinyl chloride resin fine particles are preferably produced by emulsion polymerization.

### - Average Degree of Polymerization -

The average degree of polymerization of the vinyl chloride resin constituting the vinyl chloride resin fine particles is preferably 500 or more, more preferably 700 or more, preferably 2600 or less, and more preferably 2400 or less. If the average degree of polymerization of the vinyl chloride resin constituting the vinyl chloride resin fine particles as a dusting agent is 500 or more, the powder fluidity of the vinyl chloride resin composition can be improved, and the tensile elongation of the vinyl chloride resin molded product formed using the vinyl chloride resin composition can be enhanced. On the other hand, if the average degree of polymerization of the vinyl chloride resin constituting the vinyl chloride resin fine particles is 2600 or less, the meltability of the vinyl chloride resin composition can be improved, and the surface smoothness of the vinyl chloride resin molded product formed using the vinyl chloride resin composition can be enhanced.

### - Average Particle Diameter -

The average particle diameter of the vinyl chloride resin fine particles is usually less than 30 µm, preferably 10 µm or less, more preferably 5 µm or less, preferably 0.1 µm or more, and more preferably 1 µm or more. If the average particle diameter of the vinyl chloride resin fine particles is 0.1 µm or more, the powder fluidity of the vinyl chloride resin composition can be improved without making the size as a dusting agent excessively small. On the other hand, if the average particle diameter of the vinyl chloride resin fine particles is less than 30 µm, the meltability of the vinyl chloride resin composition can be improved, and the surface smoothness of the formed vinyl chloride resin molded product can be enhanced.

### [Content Ratio]

The content ratio of the vinyl chloride resin fine particles in the vinyl chloride resin may be 0 mass%, but is preferably 5 mass% or more, more preferably 10 mass% or more, preferably 30 mass% or less, and more preferably 20 mass% or less. If the content ratio of the vinyl chloride resin fine particles in the vinyl chloride resin is 5 mass% or more, the powder fluidity of the vinyl chloride resin composition can be improved. On the other hand, if the content ratio of the vinyl chloride resin fine particles in the vinyl chloride resin is 30 mass% or less, the physical strength of the vinyl chloride resin molded product formed using the vinyl chloride resin composition can be enhanced.

### <Aliphatic Dicarboxylic Acid Salt>

The aliphatic dicarboxylic acid salt is a component that can suppress discoloration of the vinyl chloride resin molded product under high temperature conditions in the laminate of the present disclosure as described above. The aliphatic dicarboxylic acid salt can also function as a powder fluidity modifier for the vinyl chloride resin composition when producing the vinyl chloride resin molded product from the vinyl chloride resin composition.

The aliphatic dicarboxylic acid salt may be used alone or in any combination of two or more at any ratio.

Here, the aliphatic dicarboxylic acid salt is not particularly limited as long as the aliphatic dicarboxylic acid is in the form of a salt. Preferred examples of the salt form include sodium salt, potassium salt, and calcium salt, among which, from the viewpoint of further suppressing discoloration of the vinyl chloride resin molded product under high temperature conditions, the sodium salt is particularly preferred.

It is necessary to use the aliphatic dicarboxylic acid in the form of a salt, that is, as an aliphatic dicarboxylic acid salt. If an aliphatic dicarboxylic acid is used in place of the aliphatic dicarboxylic acid salt, discoloration of the vinyl chloride resin molded product that is a constituent of the laminate under high temperature conditions cannot be sufficiently suppressed.

The aliphatic dicarboxylic acid that is a constituent of the aliphatic dicarboxylic acid salt is not particularly limited as long as it is an aliphatic compound having two carboxy groups, but from the viewpoint of improving the fluidity of the vinyl chloride resin composition and further suppressing discoloration of the vinyl chloride resin molded product under high temperature conditions, preferred examples include maleic acid, malonic acid, succinic acid, adipic acid, and sebacic acid. Among these, from the viewpoint of further suppressing discoloration of the vinyl chloride resin molded product under high temperature conditions, maleic acid is particularly preferred.

**In** the laminate of the present disclosure, from the viewpoint of improving the fluidity of the vinyl chloride resin composition and further suppressing discoloration of the vinyl chloride resin molded product under high temperature conditions, the aliphatic dicarboxylic acid salt is preferably a compound represented by the formula: NaOOC-R-COONa (wherein R is an aliphatic group having not less than 1 and not more than 8 carbon atoms), and more preferably disodium maleate, disodium malonate, disodium succinate, disodium adipate, and disodium sebacate. Among these, from the viewpoint of further suppressing discoloration of the vinyl chloride resin molded product under high temperature conditions, disodium maleate is particularly preferred.

Here, the content of the aliphatic dicarboxylic acid salt in the vinyl chloride resin composition is preferably 0.30 parts by mass or more, more preferably 0.40 parts by mass or more, still more preferably 2.00 parts by mass or more, preferably 8.00 parts by mass or less, and more preferably 7.00 parts by mass or less, per 100 parts by mass of the vinyl chloride resin, from the viewpoint of improving the fluidity of the vinyl chloride resin composition and further suppressing discoloration of the vinyl chloride resin molded product under high temperature conditions.

When disodium maleate is used as the aliphatic dicarboxylic acid salt, the content of disodium maleate in the vinyl chloride resin composition is preferably 0.30 parts by mass or more, more preferably 0.40 parts by mass or more, still more preferably 1.00 part by mass or more, even more preferably 2.00 parts by mass or more, preferably 8.00 parts by mass or less, more preferably 7.00 parts by mass or less, still more preferably 5.00 parts by mass or less, even more preferably 4.00 parts by mass or less, and particularly preferably 3.00 parts by mass or less, per 100 parts by mass of the vinyl chloride resin, from the viewpoint of further suppressing discoloration of the vinyl chloride resin molded product under high temperature conditions.

### <Plasticizer>

The plasticizer is a component that can impart flexibility to the vinyl chloride resin molded product formed using the vinyl chloride resin composition. In addition, by using a plasticizer in the vinyl chloride resin composition, the meltability of the vinyl chloride resin composition is increased, so that molding (particularly powder molding) into the vinyl chloride resin molded product can be easily performed, and the surface smoothness of the formed vinyl chloride resin molded product can be enhanced.

The plasticizer may be used alone or in any combination of two or more at any ratio.

Here, the content of the plasticizer in the vinyl chloride resin composition is preferably 50 parts by mass or more, more preferably 75 parts by mass or more, still more preferably 80 parts by mass or more, even more preferably 85 parts by mass or more, particularly preferably 90 parts by mass or more, preferably 200 parts by mass or less, more preferably 185 parts by mass or less, and still more preferably 150 parts by mass or less, per 100 parts by mass of the vinyl chloride resin. If the content of the plasticizer in the vinyl chloride resin composition is 50 parts by mass or more per 100 parts by mass of the vinyl chloride resin, the meltability of the vinyl chloride resin composition can be sufficiently increased, and sufficient flexibility can be imparted to the formed vinyl chloride resin molded product. In addition, if the content of the plasticizer in the vinyl chloride resin composition is 50 parts by mass or more per 100 parts by mass of the vinyl chloride resin, the powder fluidity of the vinyl chloride resin composition can be improved. On the other hand, if the content of the plasticizer in the vinyl chloride resin composition is 200 parts by mass or less per 100 parts by mass of the vinyl chloride resin, the light resistance of the formed vinyl chloride resin molded product can be improved.

Here, it is preferable that the vinyl chloride resin composition contains at least a polyester containing a structural unit derived from adipic acid and a structural unit derived from a polyhydric alcohol as the plasticizer, and it is more preferable that both the polyester and a plasticizer other than the polyester (hereinafter referred to as "other plasticizer") are contained.

### <<Polyester>>

The polyester contains a structural unit derived from adipic acid and a structural unit derived from a polyhydric alcohol as described above.

By including the above polyester as a plasticizer in the vinyl chloride resin composition, excellent meltability can be exhibited. In addition, the polyester can improve the powder fluidity of the vinyl chloride resin composition and can also enhance the light resistance and heat contraction resistance of the formed vinyl chloride resin molded product.

### [Composition]

It is preferable that the polyester contains a structural unit derived from 2-methyl-1,3-propanediol as a structural unit derived from a polyhydric alcohol.

It should be noted that the polyester may contain a structural unit derived from a polyhydric alcohol other than 2-methyl-1,3-propanediol (hereinafter, sometimes referred to as "other polyhydric alcohols") as a structural unit derived from a polyhydric alcohol.

The content ratio of structural units derived from 2-methyl-1,3-propanediol among structural units derived from polyhydric alcohols is preferably more than 70 mol%, more preferably 80 mol% or more, still more preferably 90 mol% or more, and even more preferably 95 mol% or more, based on the total amount of structural units derived from polyhydric alcohols contained in the polyester being 100 mol%.

If the content ratio of structural units derived from 2-methyl-1,3-propanediol among the total amount of structural units derived from polyhydric alcohols contained in the polyester is more than 70%, the meltability and powder fluidity of the vinyl chloride resin composition can be sufficiently improved, and the light resistance of the formed vinyl chloride resin molded product can be sufficiently enhanced.

From the viewpoint of improving the meltability and powder fluidity of the vinyl chloride resin composition and the light resistance of the formed vinyl chloride resin molded product, it is particularly preferable that the content ratio of structural units derived from 2-methyl-1,3-propanediol among structural units derived from polyhydric alcohols is 100 mol% when the total amount of structural units derived from polyhydric alcohols contained in the polyester is set to 100 mol%.

That is, it is particularly preferable that the polyester contains only a structural unit derived from 2-methyl-1,3-propanediol as a structural unit derived from a polyhydric alcohol.

Examples of polyhydric alcohols other than 2-methyl-1,3-propanediol, which can form structural units derived from other polyhydric alcohols in the polyester, include, for example, 1,2-propylene glycol, 1,2-butanediol, 1,3-butanediol, 1,4-butanediol, 2,2-dimethyl-1,3-propanediol, and 3-methyl-1,5-pentanediol.

The content ratio of structural units derived from other polyhydric alcohols among structural units derived from polyhydric alcohols is preferably less than 30 mol%, more preferably 20 mol% or less, still more preferably 10 mol% or less, and even more preferably 5 mol% or less, based on the total amount of structural units derived from polyhydric alcohols contained in the polyester being 100 mol%. If the content ratio of structural units derived from other polyhydric alcohols among the total amount of structural units derived from polyhydric alcohols contained in the polyester is less than 30 mol%, the meltability and powder fluidity of the vinyl chloride resin composition can be further improved, and the light resistance of the formed vinyl chloride resin molded product can be further enhanced.

From the viewpoint of improving the meltability and powder fluidity of the vinyl chloride resin composition and the light resistance of the formed vinyl chloride resin molded product, it is particularly preferable that the content ratio of structural units derived from other polyhydric alcohols among structural units derived from polyhydric alcohols is 0 mol% when the total amount of structural units derived from polyhydric alcohols contained in the polyester is set to 100 mol%. That is, it is particularly preferable that the polyester does not contain a structural unit derived from a polyhydric alcohol other than 2-methyl-1,3-propanediol as a structural unit derived from a polyhydric alcohol.

The polyester may contain a structural unit derived from a polycarboxylic acid other than adipic acid as a structural unit derived from a polycarboxylic acid; however, it is preferable that the content ratio of structural units derived from adipic acid among the total amount of structural units derived from polycarboxylic acids in the polyester is 50 mol% or more, more preferably 80 mol% or more, and particularly preferably 100 mol%. That is, it is particularly preferable that the polyester contains only a structural unit derived from adipic acid as a structural unit derived from a polycarboxylic acid.

### [Production Method]

Here, the above polyester can be obtained, without particular limitation, by subjecting adipic acid and a polyhydric alcohol to condensation polymerization. The above-described condensation polymerization can be carried out in the presence of a catalyst.

Further, the above-described condensation polymerization can be carried out using an alcohol and/or a monobasic acid as a terminal blocking component. Furthermore, the condensation polymerization of adipic acid and a polyhydric alcohol and the termination reaction between the obtained condensation polymer and the above terminal blocking component may be performed together or separately. The product obtained through the condensation polymerization and termination reaction may be subjected to post-treatment such as distillation. As for the reaction conditions of the condensation polymerization, such as the amounts of adipic acid and polyhydric alcohol as the above monomers, as well as the catalyst and terminal blocking component, known conditions can be adopted.

The above polyester may also be a commercially available product.

The catalyst used in the condensation polymerization reaction is not particularly limited, and examples include dibutyltin oxide and tetraalkyl titanate.

Examples of alcohols that can be used as the terminal blocking component include methanol, ethanol, propanol, isopropanol, butanol, isobutanol, pentanol, hexanol, isohexanol, heptanol, isoheptanol, octanol, isooctanol, 2-ethylhexanol, nonanol, isononanol, decanol, isodecanol, undecanol, isoundecanol, dodecanol, tridecanol, isotridecanol, tetradecanol, pentadecanol, hexadecanol, heptadecanol, octadecanol, cellosolve, carbitol, phenol, nonylphenol, benzyl alcohol, and mixtures thereof.

Further, examples of monobasic acids that can be used as the terminal blocking component include acetic acid, propionic acid, butyric acid, isobutyric acid, valeric acid, pivalic acid, caproic acid, heptanoic acid, caprylic acid, 2-ethylhexanoic acid, pelargonic acid, capric acid, undecanoic acid, lauric acid, tridecanoic acid, myristic acid, pentadecanoic acid, palmitic acid, heptadecanoic acid, stearic acid, benzoic acid, and mixtures thereof.

Among these, 2-ethylhexanol is preferable as the terminal blocking component.

### [Physical Properties, etc.]

The weight-average molecular weight of the polyester is preferably 1,000 or more, more preferably 2,000 or more, still more preferably 3,000 or more, preferably 10,000 or less, and more preferably 7,000 or less.

In the present specification, the "weight-average molecular weight" of the polyester can be determined as a value in terms of polystyrene by gel permeation chromatography (GPC) using tetrahydrofuran as the solvent.

The acid value of the polyester is preferably 0.5 mg KOH/g or more and 2 mg KOH/g or less.

Further, the hydroxyl value of the polyester is preferably 30 mg KOH/g or less, more preferably 10 mg KOH/g or less, and still more preferably 7 mg KOH/g or less.

In the present specification, the "acid value" and "hydroxyl value" of the polyester can be measured by a method conforming to JIS K0070.

The viscosity of the polyester is preferably 500 mPa·s or more, more preferably 1,000 mPa·s or more, preferably 8,000 mPa·s or less, more preferably 5,000 mPa·s or less, and still more preferably 3,000 mPa·s or less.

In the present specification, the "viscosity" of the polyester can be measured at a temperature of 23°C in accordance with JIS Z8803.

### [Content, etc.]

The content of the polyester in the vinyl chloride resin composition is preferably more than 30 parts by mass, more preferably 50 parts by mass or more, still more preferably 70 parts by mass or more, even more preferably 80 parts by mass or more, particularly preferably 85 parts by mass or more, preferably 200 parts by mass or less, more preferably 150 parts by mass or less, and still more preferably 140 parts by mass or less, per 100 parts by mass of the vinyl chloride resin. If the content of the polyester in the vinyl chloride resin composition is more than 30 parts by mass per 100 parts by mass of the vinyl chloride resin, the meltability and powder fluidity of the vinyl chloride resin composition, as well as the light resistance and heat contraction resistance of the formed vinyl chloride resin molded product, can be improved. On the other hand, if the content of the polyester in the vinyl chloride resin composition is 200 parts by mass or less per 100 parts by mass of the vinyl chloride resin, the light resistance of the formed vinyl chloride resin molded product can be improved.

The content ratio of the polyester in the plasticizer is preferably 50 mass% or more, more preferably 65 mass% or more, still more preferably 90 mass% or more, even more preferably 93 mass% or more, and particularly preferably 95 mass% or more, can be 100 mass% or less, and is preferably 99 mass% or less, more preferably 98 mass% or less, and still more preferably 97 mass% or less, based on the total mass of the plasticizer being 100 mass%. If the content ratio of the polyester in the plasticizer is 50 mass% or more, the meltability and powder fluidity of the vinyl chloride resin composition, as well as the light resistance and heat contraction resistance of the formed vinyl chloride resin molded product, can be improved. On the other hand, if the content ratio of the polyester in the plasticizer is 99 mass% or less, the light resistance of the formed vinyl chloride resin molded product can be improved.

### <<Other Plasticizers>>

The content of other plasticizers in the vinyl chloride resin composition can be 0 parts by mass or more, preferably 0.5 parts by mass or more, more preferably 1 part by mass or more, still more preferably 1.5 parts by mass or more, even more preferably 2 parts by mass or more, preferably 40 parts by mass or less, more preferably 35 parts by mass or less, still more preferably 20 parts by mass or less, even more preferably 10 parts by mass or less, and particularly preferably 7 parts by mass or less, per 100 parts by mass of the vinyl chloride resin. If the content of other plasticizers in the vinyl chloride resin composition is 0.5 parts by mass or more per 100 parts by mass of the vinyl chloride resin, the flexibility of the formed vinyl chloride resin molded product can be enhanced. On the other hand, if the content of other plasticizers in the vinyl chloride resin composition is 40 parts by mass or less per 100 parts by mass of the vinyl chloride resin, the powder fluidity of the vinyl chloride resin composition can be improved.

The content ratio of other plasticizers in the plasticizer can be 0 mass% or more, preferably 1 mass% or more, more preferably 2 mass% or more, still more preferably 3 mass% or more, even more preferably 4.2 mass% or more, preferably 50 mass% or less, more preferably 35 mass% or less, still more preferably 10 mass% or less, even more preferably 7 mass% or less, and particularly preferably 5 mass% or less, based on the total mass of the plasticizer being 100 mass%. If the content ratio of other plasticizers in the plasticizer is 1 mass% or more, the flexibility of the formed vinyl chloride resin molded product can be further enhanced. On the other hand, if the content ratio of other plasticizers in the plasticizer is 50 mass% or less, the powder fluidity of the vinyl chloride resin composition can be improved.

Examples of other plasticizers include, for example, plasticizers described in International Publication No. 2016/098344, other than the above-described polyester.

More specifically, as other plasticizers, trimellitate esters and epoxidized vegetable oils can be used, and it is preferable to use epoxidized vegetable oils.

### [Epoxidized Vegetable Oil]

Examples of the epoxidized vegetable oil include epoxidized soybean oil and epoxidized linseed oil. Among these, from the viewpoint of improving the tensile properties of the formed vinyl chloride resin molded product at low temperatures, it is preferable to use epoxidized soybean oil as the epoxidized vegetable oil.

The content of the epoxidized vegetable oil in the vinyl chloride resin composition is preferably 2 parts by mass or more and 7 parts by mass or less per 100 parts by mass of the vinyl chloride resin. If the content of the epoxidized vegetable oil in the vinyl chloride resin composition is within the above range, the tensile properties of the formed vinyl chloride resin molded product at low temperatures can be improved.

The content ratio of the epoxidized vegetable oil in the plasticizer is preferably 1 mass% or less, more preferably 2 mass% or more, still more preferably 3 mass% or more, even more preferably 3.5 mass% or more, preferably 10 mass% or less, more preferably 7 mass% or less, and still more preferably 5 mass% or less. If the content ratio of the epoxidized vegetable oil in the plasticizer is within the above range, the tensile properties of the formed vinyl chloride resin molded product at low temperatures can be improved.

### <Additives>

The vinyl chloride resin composition of the present disclosure may further contain various additives in addition to the above-described components. The additives are not particularly limited, and examples include lubricants; stabilizers such as perchloric acid-treated hydrotalcite, zeolites, β-diketones, fatty acid metal salts, bis(1,2,2,6,6-pentamethyl-4-piperidyl)-[[3,5-bis(1,1-dimethylethyl)-4-hydroxyphenyl]methyl]butylmalonate (light stabilizer), and 6-amino-1,3-dimethyluracil; release agents; other dusting agents besides the above vinyl chloride resin fine particles; impact resistance modifiers; perchloric acid compounds other than perchloric acid-treated hydrotalcite (such as sodium perchlorate, potassium perchlorate, etc.); antioxidants; fungicides; flame retardants; antistatic agents; fillers; foaming agents; pigments; and the like.

As the above-described additives that may be contained in the vinyl chloride resin composition of the present disclosure, for example, those described in International Publication No. 2016/098344 can be used, and their preferred content is also the same.

### <Method for Preparing Vinyl Chloride Resin Composition>

The vinyl chloride resin composition used for producing the vinyl chloride resin molded product can be prepared by mixing the above-described components.

Here, as the method for mixing the vinyl chloride resin, aliphatic dicarboxylic acid salt, plasticizer, and various additives to be further blended as necessary, there is no particular limitation, and for example, a method in which the components other than the dusting agent (including vinyl chloride resin fine particles) are mixed by dry blending, and then the dusting agent is added and mixed, can be employed. Here, it is preferable to use a Henschel mixer for the dry blending. The temperature during dry blending is not particularly limited, but is preferably 50°C or higher, more preferably 70°C or higher, and preferably 200°C or lower.

### <Foamed Polyurethane Molded Product>

The foamed polyurethane molded product is not particularly limited, and a known foamed polyurethane molded product obtained by reacting and polymerizing an isocyanate and a polyol and foaming the polyurethane can be used.

The isocyanate and polyol are not particularly limited and known ones can be used. The methods of polymerization and foaming are also not particularly limited, and known methods can be used. As the polymerization catalyst used in the reaction of the isocyanate and polyol, there is no particular limitation, and examples include amine components such as triethylenediamine, triethanolamine, and triethylamine.

### (Method of Producing Laminate)

The above-described laminate of the present disclosure can be produced by using the method of producing a laminate of the present disclosure but is not particularly limited to being produced thereby.

The method of producing a laminate of the present disclosure includes a step of molding a vinyl chloride resin composition containing a vinyl chloride resin, an aliphatic dicarboxylic acid salt, and a plasticizer to obtain a vinyl chloride resin molded product (molded product forming step), and a step of stacking a foamed polyurethane molded product on the surface of the vinyl chloride resin molded product obtained in the molded product forming step to obtain a laminate in which the vinyl chloride resin molded product and the foamed polyurethane molded product are stacked adjacent to each other (laminate forming step). The method of producing a laminate of the present disclosure may optionally include steps other than the molded product forming step and the laminate forming step.

According to the method of producing a laminate of the present disclosure, a laminate in which discoloration of the vinyl chloride resin molded product under high temperature conditions is suppressed can be efficiently produced.

### <Molded Product Forming Step>

In the molded product forming step, a vinyl chloride resin composition containing at least a vinyl chloride resin, an aliphatic dicarboxylic acid salt, and a plasticizer, and optionally additives, is molded to obtain a vinyl chloride resin molded product. Here, the "vinyl chloride resin," "aliphatic dicarboxylic acid salt," "plasticizer," and "additives" are the same as those described above in the section "Laminate," and their preferred examples and preferred contents are also the same as those described above in the section "Laminate."

The molding method for molding the vinyl chloride resin composition into a vinyl chloride resin molded product is not particularly limited, and a known molding method can be used. From the viewpoint of easily obtaining a vinyl chloride resin molded product that can be favorably used as an automobile interior material such as a surface skin for an automobile instrument panel, powder slush molding is preferable.

Here, in the case where a vinyl chloride resin molded product is formed by powder slush molding, the mold temperature during powder slush molding is not particularly limited, but is preferably 200°C or higher, more preferably 220°C or higher, preferably 300°C or lower, and more preferably 280°C or lower.

When producing a vinyl chloride resin molded product, the method is not particularly limited, and for example, the following method can be used. That is, the vinyl chloride resin composition of the present disclosure is sprinkled onto a mold within the above temperature range, is left to stand for 5 seconds or more and 30 seconds or less, and then, after excess vinyl chloride resin composition is shaken off, is further left to stand at any temperature for 30 seconds or more and 3 minutes or less. Thereafter, the mold is cooled to 10°C or higher and 60°C or lower, and the obtained vinyl chloride resin molded product is removed from the mold. Thus, a sheet-shaped molded product having the shape of the mold is obtained.

### <Laminate Forming Step>

In the laminate forming step, a foamed polyurethane molded product is stacked (backed) on the surface of the vinyl chloride resin molded product obtained in the molded product forming step, thereby obtaining a laminate of the vinyl chloride resin molded product and the foamed polyurethane molded product.

The method for stacking the vinyl chloride resin molded product and the foamed polyurethane molded product is not particularly limited, and for example, the following methods can be used. That is, (1) a method in which after separately preparing the vinyl chloride resin molded product and the foamed polyurethane molded product, they are bonded together by thermal fusion, thermal adhesion, or a known adhesive; (2) a method in which an isocyanate and a polyol, which are raw materials for the foamed polyurethane molded product, are reacted and polymerized on the vinyl chloride resin molded product, and simultaneously the polyurethane is foamed, thereby directly forming the foamed polyurethane molded product on the vinyl chloride resin molded product; and the like. Among these, from the viewpoint of process simplicity and the ease of strongly adhering the vinyl chloride resin molded product and the foamed polyurethane molded product even when obtaining laminates of various shapes, the latter method (2) is preferred.

### EXAMPLES

Hereinafter, the present disclosure will be specifically described based on examples, but the present disclosure is not limited to these examples. In the following description, unless otherwise specified, "%" and "parts" indicating amounts are on a mass basis.

Further, the powder fluidity of a vinyl chloride resin composition and the suppression of discoloration under high temperature conditions of a vinyl chloride resin molded product that is a constituent of a laminate were evaluated by the following methods.

### <Powder Fluidity>

A vinyl chloride resin composition obtained in the examples and comparative examples was poured from the funnel of a powder property tester (manufactured by Nihon Abura Shikenki Co., Ltd., model "TESTERTYPE 6721") into a 100 cc brass cylinder to fill the cylinder with the vinyl chloride resin composition. Thereafter, the vinyl chloride resin composition was again poured from the cylinder into the funnel and dropped onto a flat plate, and the time (seconds) until all of the vinyl chloride resin composition had fallen was measured as the drop time. The shorter the drop time, the better the powder fluidity of the vinyl chloride resin composition.

### <Discoloration Suppression>

The color tone of the surface (textured surface) on a vinyl chloride resin molded product side of a laminate obtained in the examples and comparative examples was measured using a spectrocolorimeter (manufactured by Konica Minolta, Inc., model "CM-700d"). More specifically, the entire textured surface was divided into nine sections, the center of each section was measured for color at a total of nine points, and the average value of the obtained nine E* values was taken as E₀*.

Next, the laminate was subjected to a high-temperature treatment at 120°C for 400 hours in a Geer oven. After the high-temperature treatment, color measurement was performed in the same manner as above, and the average value of the obtained E* values was taken as E₁*.

Then, ΔE* was calculated from the equation: ΔE* = E₁* - E₀*. The smaller the value of ΔE*, the more the discoloration of the vinyl chloride resin molded product under high temperature conditions is suppressed.

### (Preparation of Polyester A Containing Structural Unit Derived from Adipic Acid and Structural Unit Derived from Polyhydric Alcohol)

Adipic acid as a polycarboxylic acid, 2-methyl-1,3-propanediol as a polyhydric alcohol, and 2-ethylhexanol as a stopper (terminal blocking component) were charged into a reaction vessel, tetraisopropyl titanate was added as a catalyst, an appropriate solvent was added as needed, and the mixture was stirred while raising the temperature. The by-product water was removed under atmospheric pressure and reduced pressure, and finally the temperature was raised to 220-230°C to complete the dehydration condensation reaction, thereby obtaining polyester A (viscosity: 2800 mPa·s, weight-average molecular weight: 4200, acid value: 1.0 mg KOH/g, hydroxyl value: 5.5 mg KOH/g) having a terminal 2-ethylhexyloxy group.

### (Example 1)

### <Preparation of Vinyl Chloride Resin Composition>

Of the compounding components shown in Table 1, all components except for the plasticizer (polyester A and epoxidized soybean oil) and the dusting agent, which is vinyl chloride resin fine particles, were placed in a Henschel mixer and mixed. When the temperature of the mixture rose to 80°C, all of the above plasticizer was added, and dry-up (meaning that the plasticizer is absorbed by the vinyl chloride resin particles, which are vinyl chloride resin, and the mixture becomes free-flowing) was performed. Thereafter, when the temperature of the dried-up mixture was cooled to 70°C or lower, the dusting agent, which is vinyl chloride resin fine particles, was added to prepare a vinyl chloride resin composition.

The powder fluidity of the obtained vinyl chloride resin composition was evaluated. The results are presented in Table 3.

### <Molded Product Forming Step>

The vinyl chloride resin composition obtained above was sprinkled onto a textured mold heated to 250°C, left to stand for an arbitrary time to melt, and then the excess vinyl chloride resin composition was shaken off. Thereafter, the textured mold onto which the vinyl chloride resin composition had been sprinkled was placed in an oven set at 200°C, and after 60 seconds from the start of standing, the textured mold was cooled with cooling water. When the mold temperature was cooled to 40°C, a vinyl chloride resin molded product (vinyl chloride resin molded sheet) with dimensions of 150 mm × 200 mm × 1 mm was removed from the mold.

### <Laminate Forming Step>

Two of the vinyl chloride resin molded products obtained above were laid in a 200 mm × 300 mm × 10 mm mold with the textured surface facing down such that the two sheets did not overlap each other.

Separately, 50 parts of a propylene glycol PO (propylene oxide)/EO (ethylene oxide) block adduct (hydroxyl value: 28 mg KOH/g, terminal EO unit content: 10%, internal EO unit content: 4%), 50 parts of a glycerin PO/EO block adduct (hydroxyl value: 21 mg KOH/g, terminal EO unit content: 14%), 2.5 parts of water, 0.2 parts of triethylenediamine ethylene glycol solution (manufactured by Tosoh Corporation, trade name "TEDA-L33"), 1.2 parts of triethanolamine, 0.5 parts of triethylamine, and 0.5 parts of a foam stabilizer (manufactured by Shin-Etsu Chemical Co., Ltd., trade name "F-122") were mixed to obtain a polyol mixture. Further, the obtained polyol mixture and polymethylene polyphenylene polyisocyanate (polymeric MDI) were mixed at a ratio to give an index of 98 to prepare a mixed solution. The prepared mixed solution was poured onto the two vinyl chloride resin molded sheets laid in the mold. Thereafter, the mold was covered with a 200 mm × 300 mm × 10 mm aluminum plate and sealed. By leaving the sealed mold to stand for 5 minutes, a laminate in which a foamed polyurethane molded product (thickness: 9 mm, density: 0.18 g/cm³) was backed onto the vinyl chloride resin molded product (thickness: 1 mm) as a surface skin was formed in the mold.

The formed laminate was taken out from the mold, and the suppression of discoloration under high temperature conditions of the vinyl chloride resin molded product was evaluated. The results are presented in Table 3.

### (Examples 2-16, Comparative Example 1)

Except that the types and/or amounts of the compounding components used for preparing the vinyl chloride resin composition were changed as indicated in Tables 1 and 2, the vinyl chloride resin composition, vinyl chloride resin molded product, and laminate were produced in the same manner as in Example 1. Evaluation was also performed in the same manner as in Example 1. The results are presented in Tables 3 and 4.

**[Table 1]**

| | | Example 1 | Example 2 | Example 3 | Example 4 | Example 5 | Example 6 | Example 7 | Example 8 |
|---|---|---|---|---|---|---|---|---|---|
| Vinyl chloride resin | Vinyl chloride resin particles¹⁾ [parts by mass] | 100 | 100 | 100 | 100 | 100 | 100 | 100 | 100 |
| | Vinyl chloride resin fine particles²⁾ [parts by mass] | 16 | 16 | 16 | 16 | 16 | 16 | 16 | 16 |
| Plasticizer | Polyester A [parts by mass] | 130 | 130 | 130 | 130 | 130 | 130 | 130 | 130 |
| | Epoxidized soybean oil³⁾ [parts by mass] | 5 | 5 | 5 | 5 | 5 | 5 | 5 | 5 |
| Stabilizer | Perchloric acid-treated hydrotalcite⁴⁾ [parts by mass] | 4.5 | 4.5 | 4.5 | 4.5 | 4.5 | 4.5 | 4.5 | 4.5 |
| | Zeolite⁵⁾ [parts by mass] | 2.4 | 2.4 | 2.4 | 2.4 | 2.4 | 2.4 | 2.4 | 2.4 |
| | β-Diketone⁶⁾ [parts by mass] | 1 | 1 | 1 | 1 | 1 | 1 | 1 | 1 |
| | Light stabilizer⁷⁾ [parts by mass] | 0.3 | 0.3 | 0.3 | 0.3 | 0.3 | 0.3 | 0.3 | 0.3 |
| | Zinc stearate⁸⁾ [parts by mass] | 0.2 | 0.2 | 0.2 | 0.2 | 0.2 | 0.2 | 0.2 | 0.2 |
| | 6-Amino-1,3-dimethyluracil⁹⁾ [parts by mass] | 0.3 | 0.3 | 0.3 | 0.3 | 0.3 | 0.3 | 0.3 | 0.3 |
| Release agent | 12-Hydroxystearic acid¹⁰⁾ [parts by mass] | 0.2 | 0.2 | 0.2 | 0.2 | 0.2 | 0.2 | 0.2 | 0.2 |
| Pigment | White¹¹⁾ | 13 | 13 | 13 | 13 | 13 | 13 | 13 | 13 |
| | Black¹²⁾ | 0.2 | 0.2 | 0.2 | 0.2 | 0.2 | 0.2 | 0.2 | 0.2 |
| | Yellow¹³⁾ | 0.5 | 0.5 | 0.5 | 0.5 | 0.5 | 0.5 | 0.5 | 0.5 |
| Aliphatic dicarboxylic acid salt | Disodium maleate¹⁴⁾ [parts by mass] | 0.5 | 3.0 | 5.0 | 7.0 | - | - | - | - |
| | Disodium malonate¹⁵⁾ [parts by mass] | - | - | - | - | 1.0 | 5.0 | 7.0 | - |
| | Disodium succinate¹⁶⁾ [parts by mass] | - | - | - | - | - | - | - | 1.0 |
| | Disodium adipate¹⁷⁾ [parts by mass] | - | - | - | - | - | - | - | - |
| | Disodium sebacate¹⁸⁾ [parts by mass] | - | - | - | - | - | - | - | - |

**[Table 2]**

| | | Example 9 | Example 10 | Example 11 | Example 12 | Example 13 | Example 14 | Example 15 | Example 16 | Comparative Example 1 |
|---|---|---|---|---|---|---|---|---|---|---|
| Vinyl chloride resin | Vinyl chloride resin particles¹⁾ [parts by mass] | 100 | 100 | 100 | 100 | 100 | 100 | 100 | 100 | 100 |
| | Vinyl chloride resin fine particles²⁾ [parts by mass] | 16 | 16 | 16 | 16 | 16 | 16 | 16 | 16 | 16 |
| Plasticizer | Polyester A [parts by mass] | 130 | 130 | 130 | 130 | 130 | 130 | 130 | 130 | 130 |
| | Epoxidized soybean oil³⁾ [parts by mass] | 5 | 5 | 5 | 5 | 5 | 5 | 5 | 5 | 5 |
| Stabilizer | Perchloric acid-treated hydrotalcite⁴⁾ [parts by mass] | 4.5 | 4.5 | 4.5 | 4.5 | 4.5 | 4.5 | 4.5 | 4.5 | 4.5 |
| | Zeolite⁵⁾ [parts by mass] | 2.4 | 2.4 | 2.4 | 2.4 | 2.4 | 2.4 | 2.4 | 2.4 | 2.4 |
| | β-Diketone⁶⁾ [parts by mass] | 1 | 1 | 1 | 1 | 1 | 1 | 1 | 1 | 1 |
| | Light stabilizer⁷⁾ [parts by mass] | 0.3 | 0.3 | 0.3 | 0.3 | 0.3 | 0.3 | 0.3 | 0.3 | 0.3 |
| | Zinc stearate⁸⁾ [parts by mass] | 0.2 | 0.2 | 0.2 | 0.2 | 0.2 | 0.2 | 0.2 | 0.2 | 0.2 |
| | 6-Amino-1,3-dimethyluracil⁹⁾ [parts by mass] | 0.3 | 0.3 | 0.3 | 0.3 | 0.3 | 0.3 | 0.3 | 0.3 | 0.3 |
| Release agent | 12-Hydroxystearic acid¹⁰⁾ [parts by mass] | 0.2 | 0.2 | 0.2 | 0.2 | 0.2 | 0.2 | 0.2 | 0.2 | 0.2 |
| Pigment | White¹¹⁾ | 13 | 13 | 13 | 13 | 13 | 13 | 13 | 13 | 13 |
| | Black¹²⁾ | 0.2 | 0.2 | 0.2 | 0.2 | 0.2 | 0.2 | 0.2 | 0.2 | 0.2 |
| | Yellow¹³⁾ | 0.5 | 0.5 | 0.5 | 0.5 | 0.5 | 0.5 | 0.5 | 0.5 | 0.5 |
| Aliphatic dicarboxylic acid salt | Disodium maleate¹⁴⁾ [parts by mass] | - | - | - | - | - | - | - | - | - |
| | Disodium malonate¹⁵⁾ [parts by mass] | - | - | - | - | - | - | - | - | - |
| | Disodium succinate¹⁶⁾ [parts by mass] | - | - | - | - | - | - | - | - | - |
| | Disodium adipate¹⁷⁾ [parts by mass] | 1.0 | 3.0 | 5.0 | 7.0 | - | - | - | - | - |
| | Disodium sebacate¹⁸⁾ [parts by mass] | - | - | - | - | 1.0 | 3.0 | 5.0 | 7.0 | - |

**[Table 3]**

| | | Example 1 | Example 2 | Example 3 | Example 4 | Example 5 | Example 6 | Example 7 | Example 8 |
|---|---|---|---|---|---|---|---|---|---|
| Content per 100 parts by mass of vinyl chloride resin | Polyester A [parts by mass] | 112.1 | 112.1 | 112.1 | 112.1 | 112.1 | 112.1 | 112.1 | 112.1 |
| | Epoxidized soybean oil [parts by mass] | 4.3 | 4.3 | 4.3 | 4.3 | 4.3 | 4.3 | 4.3 | 4.3 |
| | Plasticizer [parts by mass] | 116.4 | 116.4 | 116.4 | 116.4 | 116.4 | 116.4 | 116.4 | 116.4 |
| | Disodium maleate [parts by mass] | 0.43 | 2.59 | 4.31 | 6.03 | - | - | - | - |
| | Disodium malonate [parts by mass] | - | - | - | - | 0.86 | 4.31 | 6.03 | - |
| | Disodium succinate [parts by mass] | - | - | - | - | - | - | - | 0.86 |
| | Disodium adipate [parts by mass] | - | - | - | - | - | - | - | - |
| | Disodium sebacate [parts by mass] | - | - | - | - | - | - | - | - |
| Discoloration suppression: ΔE* | | 14.1 | 10.8 | 12.5 | 12.8 | 14.0 | 13.7 | 12.5 | 14.1 |
| Powder fluidity: Drop time (seconds) | | 11.7 | 12.0 | 12.0 | 12.1 | 12.2 | 12.0 | 11.9 | 12.3 |

**[Table 4]**

| | | Example 9 | Example 10 | Example 11 | Example 12 | Example 13 | Example 14 | Example 15 | Example 16 | Comparative Example 1 |
|---|---|---|---|---|---|---|---|---|---|---|
| Content per 100 parts by mass of vinyl chloride resin | Polyester A [parts by mass] | 112.1 | 112.1 | 112.1 | 112.1 | 112.1 | 112.1 | 112.1 | 112.1 | 112.1 |
| | Epoxidized soybean oil [parts by mass] | 4.3 | 4.3 | 4.3 | 4.3 | 4.3 | 4.3 | 4.3 | 4.3 | 4.3 |
| | Plasticizer [parts by mass] | 116.4 | 116.4 | 116.4 | 116.4 | 116.4 | 116.4 | 116.4 | 116.4 | 116.4 |
| | Disodium maleate [parts by mass] | - | - | - | - | - | - | - | - | - |
| | Disodium malonate [parts by mass] | - | - | - | - | - | - | - | - | - |
| | Disodium succinate [parts by mass] | - | - | - | - | - | - | - | - | - |
| | Disodium adipate [parts by mass] | 0.86 | 2.59 | 4.31 | 6.03 | - | - | - | - | - |
| | Disodium sebacate [parts by mass] | - | - | - | - | 0.86 | 2.59 | 4.31 | 6.03 | - |
| Discoloration suppression: ΔE* | | 13.9 | 13.0 | 12.8 | 13.5 | 13.5 | 13.2 | 13.5 | 13.5 | 14.4 |
| Powder fluidity: Drop time (seconds) | | 12.2 | 12.1 | 12.2 | 12.2 | 12.5 | 12.1 | 12.2 | 12.5 | 12.8 |

1) Manufactured by Shin Dai-ichi Vinyl Corporation, product name "ZEST^{®} (ZEST is a registered trademark in Japan, other countries, or both) 1700ZI" (prepared by suspension polymerization, average degree of polymerization: 1700, average particle diameter: 129 µm)
2) Manufactured by Shin Dai-ichi Vinyl Corporation, product name "ZEST PQLTX" (prepared by emulsion polymerization, average degree of polymerization: 800, average particle diameter: 1.8 µm)
3) Manufactured by ADEKA Corporation, product name "ADK CIZER^{®} (ADK CIZER is a registered trademark in Japan, other countries, or both) O-130S"
4) Manufactured by Kyowa Chemical Industry Co., Ltd., product name "ALCAMIZER^{®} (ALCAMIZER is a registered trademark in Japan, other countries, or both) 5"
5) Manufactured by Mizusawa Industrial Chemicals, Ltd., product name "MIZUKALIZER^{®} (MIZUKALIZER is a registered trademark in Japan, other countries, or both) DS"
6) Manufactured by Resonac Corporation, product name "KARENZ^{®} (KARENZ is a registered trademark in Japan, other countries, or both) DK-1"
7) Manufactured by BASF, product name "Tinuvin^{®} (Tinuvin is a registered trademark in Japan, other countries, or both) 144", bis(1,2,2,6,6-pentamethyl-4-piperidyl)-[[3,5-bis(1,1-dimethylethyl)-4-hydroxyphenyl]methyl]butylmalonate
8) Manufactured by Sakai Chemical Industry Co., Ltd., product name "SAKAI SZ2000"
9) Manufactured by FUJIFILM Wako Pure Chemical Corporation
10) Manufactured by ADEKA Corporation, product name "ADK STAB^{®} (ADK STAB is a registered trademark in Japan, other countries, or both) LS-12"
11) Manufactured by Dainichiseika Color & Chemicals Mfg. Co., Ltd., product name "DA P-1050 White"
12) Manufactured by Dainichiseika Color & Chemicals Mfg. Co., Ltd., product name "DA P-4720 Black"
13) Manufactured by Dainichiseika Color & Chemicals Mfg. Co., Ltd., product name "DA P-4446 Yellow"
14) Manufactured by Tokyo Chemical Industry Co., Ltd.
15) Manufactured by Tokyo Chemical Industry Co., Ltd.
16) Manufactured by Tokyo Chemical Industry Co., Ltd.
17) Manufactured by Tokyo Chemical Industry Co., Ltd.
18) Manufactured by Tokyo Chemical Industry Co., Ltd.

From Tables 1 to 4, it can be seen that the laminates of Examples 1 to 16, which were obtained by stacking a vinyl chloride resin molded product formed by molding a vinyl chloride resin composition comprising a vinyl chloride resin, an aliphatic dicarboxylic acid salt, and a plasticizer, and a foamed polyurethane molded product, exhibit suppressed discoloration of the vinyl chloride resin molded product under high temperature conditions as compared to Comparative Example 1.

### INDUSTRIAL APPLICABILITY

According to the present disclosure, it is possible to provide a laminate of a vinyl chloride resin molded product and a foamed polyurethane molded product in which discoloration of the vinyl chloride resin molded product under high temperature conditions is suppressed, and a method of producing such a laminate.

## Claims

1. A laminate comprising a vinyl chloride resin molded product and a foamed polyurethane molded product stacked adjacent to the vinyl chloride resin molded product, wherein the vinyl chloride resin molded product is a molded product obtained by molding a vinyl chloride resin composition comprising a vinyl chloride resin, an aliphatic dicarboxylic acid salt, and a plasticizer.

2. The laminate according to claim 1, wherein content of the aliphatic dicarboxylic acid salt in the vinyl chloride resin composition is not less than 0.30 parts by mass and not more than 8.00 parts by mass per 100 parts by mass of the vinyl chloride resin.

3. The laminate according to claim 1, wherein the aliphatic dicarboxylic acid salt comprises at least one selected from the group consisting of disodium maleate, disodium malonate, disodium succinate, disodium adipate, and disodium sebacate.

4. The laminate according to claim 1, wherein content of the plasticizer in the vinyl chloride resin composition is not less than 50 parts by mass and not more than 200 parts by mass per 100 parts by mass of the vinyl chloride resin.

5. The laminate according to claim 1, wherein the plasticizer comprises a polyester containing a structural unit derived from adipic acid and a structural unit derived from a polyhydric alcohol.

6. The laminate according to any one of claims 1 to 5, wherein the laminate is for an automobile instrument panel.

7. A method of producing a laminate, comprising molding a vinyl chloride resin composition comprising a vinyl chloride resin, an aliphatic dicarboxylic acid salt, and a plasticizer to obtain a vinyl chloride resin molded product, and stacking a foamed polyurethane molded product on a surface of the vinyl chloride resin molded product to obtain a laminate in which the vinyl chloride resin molded product and the foamed polyurethane molded product are stacked adjacent to each other.

8. The method of producing a laminate according to claim 7, wherein content of the aliphatic dicarboxylic acid salt in the vinyl chloride resin composition is not less than 0.30 parts by mass and not more than 8.00 parts by mass per 100 parts by mass of the vinyl chloride resin.

9. The method of producing a laminate according to claim 7, wherein the aliphatic dicarboxylic acid salt comprises at least one selected from the group consisting of disodium maleate, disodium malonate, disodium succinate, disodium adipate, and disodium sebacate.

10. The method of producing a laminate according to claim 7, wherein content of the plasticizer in the vinyl chloride resin composition is not less than 50 parts by mass and not more than 200 parts by mass per 100 parts by mass of the vinyl chloride resin.

11. The method of producing a laminate according to claim 7, wherein the plasticizer comprises a polyester containing a structural unit derived from adipic acid and a structural unit derived from a polyhydric alcohol.

12. The method of producing a laminate according to any one of claims 7 to 11, wherein the vinyl chloride resin molded product is obtained by powder slush molding the vinyl chloride resin composition.
